# EUROPEAN PATENT APPLICATION

(11) **EP 4 751 874 A2**
(43) Date of publication of application: **03.06.2026**
(21) Application number: 26172906.5
(22) Date of filing: 18.12.2024
(51) Int. Cl.: B29C 33/48

(54) **APPARATUS AND METHOD FOR FORMING A COMPOSITE PART**

(30) Priority: 22.12.2023 GB 202319947
(62) Divisional of application: 24221324.7
(71) Applicant: Short Brothers Plc, Belfast, Antrim BT3 9DZ (GB)
(72) Inventor: WILSON, Robert Samuel, Belfast, BT3 9DZ (GB); BRANIFF, Mark Anthony, Belfast, BT3 9DZ (GB); WALSH, Oran, Belfast, BT3 9DZ (GB)
(74) Representative: HGF

(57) **Abstract**

The methods and apparatus disclosed provide for a layup of dry reinforcement material on the layup region of a tooling surface of a first mould to be sealed in a mould cavity by a second mould, wherein a gap is provided within the mould cavity between the layup and a inner face of the second mould, while the first and second mould are sealed. Matrix material is injected into the gap and the first and second moulds moved in relation to one another to reduce the volume of the mould cavity while the first and second moulds are sealed to one another, to thereby infuse the layup with the matrix material. The movement between the first and second moulds in relation to one is effected by a pressure differential between an inside and an outside of the mould cavity. The apparatus is compatible with both autoclave and out of autoclave methods, and moulds for use therewith having a stiffened central region and a flexible peripheral region for sealing against a tooling surface are also disclosed.

## Description

### FIELD OF THE INVENTION

The invention relates to the manufacture of composite parts and in particular to infusion of dry reinforcement material with matrix material.

### BACKGROUND TO THE INVENTION

Composite materials are widely used in a number of industries, such as aerospace, automotive, civil engineering and sports goods, due to their high strength-to-weight ratio.

Composite materials such as carbon fibre composite and fibreglass composite are formed from reinforcement material (typically fibrous) impregnated with a matrix material. Typically, multiple plies or layers of a fabric reinforcement material are impregnated with and reinforce a polymer matrix. For example, a carbon fibre fabric is formed by carbonizing a synthetic polymer fabric material and may be provided in the form of woven fabric, non-woven fabric or may consist of unidirectional fibres. Similar composites may be formed using alternative fibrous materials, such as glasses or synthetic polymers (e.g. aramid), or combinations of such materials. Composites may also be formed by mixing or dispersing relatively short strands or fibrils of a fibre material, such as carbon fibre or a glass fibre, within a polymer matrix to form a mouldable or injectable composite material.

It is desirable for some composite applications, such as aerospace applications, for parts to have consistent properties and dimensions. Meeting these requirements using composite materials can be challenging, particularly for larger geometrically complex parts. Energy costs and manufacturing time can also lead to increased costs for composite manufacture.

Autoclaves have long been used for composite manufacture. Reinforcement material, typically in the form of a fabrics material layer-up in multiple plies on the lay-up region of the tooling surface of a hard tool or mould, is sealed within a vacuum bag and heated under pressure to compress or "consolidate" the reinforcement material and evenly impregnate the reinforcement material with a resin or matrix material. A vacuum is applied to the volume defined between the vacuum bag and the tooling surface to assist displacement of air from within the reinforcement lay-up. The reinforcement material is pre-impregnated with matrix material (which for example comprises so-called "pre-preg" or "semi-preg" fabric having matrix material such as uncured resin on both or one sides), or a film of matrix material is interleaved with resin film. There is a limit to the fabric thickness that can be pre-impregnated and, for curable matrix materials, pre-impregnated fabric or matrix films have a finite shelf life may and require refrigerated storage.

Out of autoclave (OoA) methods are also used, in which lay-ups are consolidated under the pressure across a vacuum bag between the ambient atmospheric pressure and the reduced pressure within the vacuum bag (i.e. the volume defined between the vacuum bag and the tooling surface). This approach can be used with pre-preg material and also with dry reinforcement material, but there is more limited available pressure differential. Additionally, while OoA methods can be more cost effective than autoclave methods, the manufactured composite parts suffer from greater dimensional variability and variability of V_{f} across a composite part and voids caused by "race tracking" of resin fronts, and the like. Matrix material infusion can also be time limiting and add to manufacturing costs. Whilst this can be addressed to some extent by use of flow media to increase the rate of matrix material distribution over a lay-up, the flow media may necessitate additional surface post treatment.

Resin infusion methods have been developed to reduce manufacturing time using dry reinforcement material. These include resin transfer moulding, or "RTM", which is generally used to refer to methods in which a layup is positioned in a mould cavity between two hard moulds, which are then externally heated, and resin transfer infusion (RTI) in which one mould is at least semi-flexible. Whilst these and related variants each have their advantages and disadvantages, resin transfer methods in which resin is injected into a (typically) already evacuated mould cavity is of particular benefit for larger composite parts. In such methods, dry reinforcement is laid up on tooling surface (often referred to as the "outer mould" that defines the "outer mould line" (OML)). The lay-up is then compressed within the cavity defined between the first and a second hard tooling surface (often referred to as the "inner mould" that defines the "inner mould line" (IML)). The first and second moulds/tools are sealed together and matrix material injected into the cavity. In resin transfer moulding, the hard tooling allows for resin to be injected under pressure, typically with vacuum assistance to remove trapped air. The part is then heated. Typically, the matrix material is heated to lower the viscosity thereof and reduce infusion time. However, while RTM provides for consistent dimensions and V_{f}, infusion proceeds along the plane of the part such that infusion time can remain problematic and may even limit composite part size or geometry for some curable resin systems.

Resin transfer infusion (RTI) or Autoclave assisted Resin infusion (AARI) has been developed to reduce manufacturing time using dry reinforcement material.

RTI is of particular benefit for larger and highly curved composite parts. In RTI methods, the mould cavity is placed under vacuum and, when resin is injected it is forced over the surface, accommodated by deflection of the flexible or semi-flexible mould. The part is then heated and compressed in an autoclave to infuse the resin through the thickness of the part. While RTI does provide advantages over RTM, vacuum air extraction and resin fill times can be prolonged i.e. because vacuum creates a high consolidation pressure inhibiting air extraction and resin introduction (wet-out).

So called "Compression RTM" (C-RTM) has been developed to address this issue, in which matrix material is injected while the two moulds are spaced apart (but still sealed), while the moulds are clamped together.

The application of vacuum is rapid (unrestricted by a consolidation force) and matrix material is infused through the thickness of the lay-up across the entire face of the second tooling surface.

Issues remain, however. Hard -tooling is required maintain the gap for resin injection with minimal deflection and the equipment required for C-RTM adds costs / complexity. Moreover, maintaining the seal during injection and compression can be challenging. The requirement of increased stiffness of the IML mould, adds costs but its rigidity offers components with high dimensional tolerance (over baseline RTI). In turn, opening the cavity between two stiff moulds can be challenging, leading to surface damage or imperfections.

A variation was developed by Short Brothers PLC, and described for example in GB 2,316,036 and WO 2008/040970, the contents of which are incorporated herein by reference. A semi-flexible vacuum bag is used, having relatively flexible regions around the periphery and relatively stiffer regions over the lay-up. This arrangement allows variation in the volume of the cavity, such that matrix material can be injected across the part under somewhat increased pressure and then compressed to infuse through the thickness of the lay-up. Moreover, infusion can be performed in an autoclave and autoclave pressure used to infuse and consolidate the lay-up. The technique allows the use of an autoclave (and thus utilizes apparatus that is compatible with a range of parts), and the bag flexibility eases removal of the composite parts. The bag flexibility means the layup can be compressed under vacuum and/or autoclave pressure, which can slowing the infusion cycle and can limit the achievable cured tolerances.

### SUMMARY OF THE INVENTION

In a first aspect, there is disclosed an apparatus for infusing a lay-up of reinforcement material with a matrix material, the apparatus comprising:
a first mould, having a hard tooling surface with a lay-up region;
a second mould having an inner face; wherein the first mould is sealable to the second mould to define a mould cavity that is defined between the lay-up region and the inner face;
a sealing arrangement, for forming a gas-tight seal between the first and second moulds, around a periphery of the lay-up region;
   wherein the sealing arrangement is adapted to accommodate variations in the volume of the mould cavity whilst maintaining the seal between the first and second moulds; and
an adjustment system arranged at least partly around the lay-up region adapted to vary the volume of the mould cavity or permit the volume of the mould cavity to vary, under the action of forces acting between the first mould and the second mould.

In use, reinforcement material is laid up on the layup region, and the first and second moulds sealed to one another to define the mould cavity. A gap between the inner face and the layup is provided, and matrix material injected across the layup. Following injection, the volume of the mould cavity is then decreased, using or following use of the adjustment system, and matrix material infused through a thickness of the layup. Typically, the layup is only compressed or consolidated when the moulds are brought together.

The apparatus is compatible with both autoclave and out of autoclave applications, to consolidate the infused layup under the action of a pressure differential between an inside and an outside of the mould cavity.

The second mould may be configured with sufficient rigidity to maintain a gap defined between the inner face and a lay-up (or preform) on the lay-up region, when the mould cavity is placed under vacuum. That is to say, the second mould does not sag or collapse when a pressure differential is applied between the mould cavity and an outside of the mould cavity.

Typically, a gap defined between the inner face and the lay-up in use will be between around 1-5 mm, 2-4 mm or around 2-3 mm. Typically, the second mould is configured to maintain the gap against a pressure differential of up to or around 1 atm, for example between around 0.7 and 1 atm, or 0.8 and 1 atm - as might result from applying a vacuum to the mould cavity to remove air therefrom prior to and during matrix material injection.

The apparatus may be configured to have an uncompressed configuration, and a compressed configuration, wherein the volume of the mould cavity and a distance between the inner surface and the layup region in the uncompressed configuration is greater than in the compressed configuration:
wherein, the adjustment system has an extended state, in which the apparatus is maintained in the uncompressed configuration, and a collapsed state, in which the apparatus is in the compressed configuration.

The adjustment system may be operable to be moved to the collapsed state under the action of a pressure differential applied between the mould cavity and an outside of the mould cavity.

The second mould may have an outer face opposite to the inner face, and the adjustment system may be operable to be moved to the collapsed state under the action of a pressure between the mould cavity and the outer face.

The adjustment system may be operable to be moved between the collapsed state and the extended state to increase the volume of the mould cavity and place the apparatus in the uncompressed configuration. Such movement to the extended state may define the gap between the inner face and the lay-up, in use.

The adjustment system may be operable to be moved between the collapsed state against forces resulting from a pressure differential between the mould cavity and an outside of the mould cavity, such as that resulting from applying a vacuum thereto.

In the extended configuration, the adjustment system may be configured to maintain the apparatus in the uncompressed configuration against a pressure differential between the mould cavity and an outside of the mould cavity, such as that resulting from applying a vacuum to the mould cavity and/or applying autoclave pressure (typically 6-8 Bar as known in the art).

The support structure provides additional mechanical support and stiffness, against forces that would otherwise urge regions of the inner face away from the layup region, facilitating use of increased injection pressure of matrix material into the cavity.

In some embodiments disclosed herein, movement of the second mould in relation to the first mould is limited or prevented, for example by an end stop as disclosed in further detail below, whereby matrix material injection pressure may be still further increased.

The second mould may comprise any suitable gas impermeable material or materials, formed as a single or multiple layers, with the thermal stability and mechanical strength required to withstand temperatures and pressure differentials encountered in use, typically of the order of 150°C, 180°C or more, depending on the matrix material and temperature cycle used. A pressure differential across the second mould may be of the order of 1 atm, for example when the vacuum cavity is evacuated to assist in infusion, up to around 6-10 atm in an autoclave.

The second mould may include a support structure coupled to the outer face of the mould.

The support structure supplements the stiffness of the second mould.

The support structure may comprise one or more typically a plurality of support elements extending across the outer face. Support elements may be spaced apart in an array, for example an array of parallel and in some embodiments orthogonal support elements.

Orthogonal support elements may interlock with one another.

The support elements may define cells distributed across the outer face of the second mould. The support elements may form a so-called "egg-box" structure.

The one or more support elements may define one or more ribs, extending away from the outer face of the second mould.

The one or more support elements may have a foot portion for coupling to the outer face, and a rib portion, extending away, typically orthogonally, from the foot portion.

It will be understood that the orientation of the inner and outer faces may locally vary to accommodate part geometry. The orientation of the support elements would typically be the same as one another, however.

The support elements, or portions thereof (e.g. foot portions) may be coupled to an underlying panel or layer in any suitable manner, such as by adhesive, welding, co-moulding or the like. Alternatively, or in addition mechanical fixings such as nuts and bolts may be used.

The support structure may comprise one or more primary elements, such as girders or beams, to which the support element or elements are attached. The one or more primary elements may extend laterally beyond the/each support element, and may be operatively coupled to the actuation system.

The support structure may comprise one or more support panels or support layers extending parallel to the outer face, across all or a part of the outer face. The support panel(s) or layer(s) may be coupled to the outer face, or embedded between the inner and outer faces.

One or more parts of the support structure may be decouplable, via releasable fixings. Partial disassembly thereof may be beneficial for space saving within an autoclave or an oven, reduce total heat capacity of the second mould and/or permit common components to be used to manufacture multiple composite parts in parallel. In some embodiments, the one or more primary elements may be releasably secured to the respective support elements, when required to open the mould cavity for example.

The second mould may comprise a stiffened central region adjacent to the mould cavity in use. The stiffened central region may extend in some embodiments beyond the periphery of the mould cavity, to engage with components of the sealing arrangement or adjustment system; as discussed in further detail below.

The second mould may comprise a flexible peripheral region extending beyond the stiffened central region. As disclosed herein, the peripheral region may be used to seal the second mould to the first mould and accommodate variations in the volume of the mould cavity (and accordingly form part of the sealing arrangement).

Whilst various second mould constructions are envisaged to give rise to the required stiffness to define the gap against a pressure differential in use, in some embodiments, two or more layers are laminated to or co-moulded with one another across at least a stiffened central region adjacent to the mould cavity in use.

The second mould may comprise, for example, a relatively stiff plastics or composite layer (which may itself be formed of multiple plies of reinforcement material) laminated to an elastomeric layer across at least the stiffened central region.

The second mould may comprise a lamellar structure, between the inner and outer faces.

A reduced amount of material of the mould can reduce costs and time associated with heating and cooling. Also, second the mould may have sufficient rigidity for the manufacturing process, but retain sufficient flex to facilitate opening of the mould, without the difficulties associated with conventional hard tooling.

In some embodiments the second mould comprises an elastomeric layer formed of an elastomeric material, such as a vacuum bagging material as known in the art. The elastomeric layer may be an elastomeric bagging layer.

The second mould may comprise a composite material (i.e. a reinforcement material infused with a matrix material), across at least the stiffened central region. Advantageously, the composite material may be the same class of material as the composite part to be formed, or the second mould otherwise matched to the CTE of the composite part to be formed.

The second mould may comprise an elastomeric material defining the inner face. The inner face may comprise an elastomeric coating or may, in some embodiments be defined by a composite material in which the matrix material is elastomeric, or by the elastomeric bagging layer.

The elastomeric bagging layer may define the inner or outer face. The elastomeric bagging layer may, in some embodiments, encapsulate the support elements and/or (where present) the support panels.

The elastomeric bagging layer may comprise the flexible peripheral region extending beyond a stiffened central region adjacent to the mould cavity.

The elastomeric material of the bagging layer or coating may comprise a polyacrylic, flouro elastomer, silicone or other elastomer capable of providing vacuum and withstanding conditions (temperature, pressure, contact with the matrix material) encountered in use.

At least the stiffened central portion may comprise a semi-flexible (alternatively referred to as semi-rigid) construction.

The term "semi-flexible" or "semi-rigid" herein refers to a degree to flexibility that allows deflection to some degree to accommodate thermal expansion and contraction of adjacent components or materials, under the conditions encountered in use (typically over a temperature range from around ambient temperature to around 200-210 Celsius depending on manufacturing conditions), but having sufficient rigidity to maintain a general shape and configuration, under its own weight. That is to say, a flexible vacuum bag may in use be draped over and peeled from a layup or part as the case may be, whereas a semi-flexible sheet or structure can be positioned or removed as a whole.

In other embodiments, the required rigidity of the second mould is provided substantially by the support structure coupled to a flexible layer such as a vacuum bagging layer.

The first mould may be of generally conventional configuration, having a low CTE tooling surface, composted of a low CTE material such as Invar (Invar is a trademark) or a tooling surface having a CTE selected to match that of the composite material being formed.

The tooling surface, and the layup region in particular, defines an outer profile of the composite part to be formed, and thus may be planar, curved or a combination thereof.

Both the moulds may be adapted for heating and/or cooling of the tooling surface, and accordingly may for example comprise one or more heating element or hot and/or cold fluid circuits in thermal contact with the tooling surface (for example embedded therein) for regulating the temperature of the tooling surface. Heated tools may be of use in OoA applications. A cooled tooling surface may be of use to reduce manufacturing time, as known to one skilled in the art.

The first mould may be adapted to vary the volume of the mould cavity, as disclosed in further detail herein.

The sealing arrangement may include any suitable sealing member or members disposed between the first and second moulds, around a periphery of the layup region.

The sealing arrangement may comprise a primary sealing arrangement, comprising one or more O-rings and clamps, vacuum tape or the like.

The primary sealing arrangement may be provided between the flexible peripheral region and the first tool (e.g. the tooling surface and/or a peripheral bar or Z-member) around the tooling surface.

The apparatus may further comprise one or more secondary sealing arrangements around joints between components of the first or second moulds, as known in the art.

Advantageously, the sealing arrangement may comprise an excess of the flexible peripheral region between the primary sealing arrangement and the stiffened central region. The excess of material can be taken up in use to accommodate movement between the first and second moulds. The excess material may comprise one or more pleats or folds, to accommodate movement between the first and second moulds

The adjustment system may comprise one or more inflatable bladders disposed between the first and second moulds around a periphery of the mould cavity. The one or more inflatable bladders may be disposed between the tooling surface or a peripheral bar around the tooling surface, and the inner face.

When the apparatus is in the uncompressed configuration and the adjustment system in the extended state, the/each inflatable bladder is inflated. When the apparatus is in the compressed configuration and the adjustment system is in the collapsed state, the/each inflatable bladder is deflated.

The inflatable bladders may be elongate. The one or more inflatable bladders may not extend entirely around the mould cavity. For example, inflatable bladders may extend along opposite sides.

The one or more inflatable bladders may be disposed around a periphery that is concentrically inside of the primary sealing arrangement. The one or more inflatable bladders may be concentrically within the excess material of the flexible peripheral portion. The one or more inflatable bladders may be concentrically within the flexible peripheral portion.

The one or more inflatable bladders may act between the first mould (e.g. the tooling surface or a peripheral bar) and the stiffened central region.

The inflatable bladder(s) may be disposed in a peripheral cavity or channel defined between the first and second moulds. For example, the tooling surface may be provide with an indentation or channel to assist in locating the bladder(s). Alternatively, or additionally, the second mould may be provided with such a peripheral channel or cavity - which may for example be defined by a part of the stiffened central region. The peripheral channel or cavity may be laterally wider than the inflatable bladder, to accommodate changes in dimensions in use.

The adjustment system accordingly may further comprise apparatus for inflating and deflating the or each inflatable bladder, such as a compressed air source and vent, hydraulics or the like.

The one or more inflatable bladders are advantageously hydraulic bladders, wherein the apparatus for inflating and deflating the seal comprises hydraulic pump, a hydraulic fluid reservoir and fluid lines coupled to the hydraulic seal.

Any suitable hydraulic fluid may be used, such as hydraulic oil. In some embodiments the matrix material or a related composition (such as a component of a resin with no catalysing or curing agent) may be employed. Such material may be readily available in situ and possess acceptable viscosity and thermal stability under the conditions encountered in use of the apparatus. In the event of leakage, the consequences of contamination of the layup or composite part are thereby reduced.

For some lower temperature applications, water may be used.

The or each inflatable bladder may comprise a compressible outer, formed of a sealing material such as an elastomer, silicone, or the like, defining an internal cavity or channel. Accordingly the one or more inflatable bladders (or indeed reconfigurable bladders discussed herein of analogous construction) can contribute to sealing between the moulds.

In use the inflatable bladder may function as a barrier to resin material. The inflatable bladder may in some applications supplement the seal between the first and second moulds.

The adjustment system may comprise one or more reconfigurable bladders containing a meltable medium, disposed between the first and second moulds around a periphery of the mould cavity. The one or more reconfigurable bladders may be disposed between the tooling surface or a peripheral bar around the tooling surface, and the inner face.

The reconfigurable bladders may be elongate. The one or more reconfigurable bladders may not extend entirely around the mould cavity. For example, reconfigurable bladders may extend along opposite sides.

The one or more reconfigurable bladders may be disposed around a periphery that is concentrically inside of the primary sealing arrangement. The one or more reconfigurable bladders may be concentrically within the excess material of the flexible peripheral portion.

The one or more reconfigurable bladders may be concentrically within the flexible peripheral portion.

The one or more reconfigurable bladders may act between the first mould (e.g. the tooling surface or a peripheral bar) and the stiffened central region.

The reconfigurable member may be disposed in a peripheral cavity or channel defined between the first and second moulds.

When the apparatus is in the uncompressed configuration and the adjustment system in the extended state, the meltable material in the/each reconfigurable bladder is in a solid state. When the apparatus is in the compressed configuration and the adjustment system is in the collapsed state, he meltable material in the/each reconfigurable bladder is in a liquid state.

In use, following layup of reinforcement material, the one or more reconfigurable bladders are disposed between the first and second moulds and the seal established. The meltable material is in a solid state and thus the one or more reconfigurable bladders function as a spacer to maintain the apparatus in the uncompressed configuration.

To change between the extended and collapsed states, the temperature of the meltable material is raised (typically consequent to the temperature of the matrix material or the apparatus as a whole during injection or infusion) such that the meltable material melts and the reconfigurable bladder deforms permitting the moulds to move closer together an infuse the reinforcement material.

The meltable material may be a thermoplastics material having a low melting point (below the operating temperature of the apparatus when the matrix material is injected or infused).

The meltable material may comprise a eutectic material, such as a eutectic salt, or alloy having a suitably low eutectic point. Advantageously a eutectic material will transition directly and rapidly from a solid to a liquid phase at the eutectic point, without progressing via a biphasic state.

The apparatus may comprise a resilient biasing system configured to apply a biasing force to urge the first and second moulds towards one another and maintain engagement between the first and second moulds, and one or more inflatable or reconfigurable bladders therebetween.

One or more secondary seals may be provided concentrically inside and/or outside of the one or more inflatable or reconfigurable bladders, to provide a barrier to flow of matrix material.

The one or more inflatable or reconfigurable bladders, and any further secondary seals may additionally be provided with a lubricious film or a stretchable film disposed between the said sealing member or seals and the first and/or second moulds. A lubricious or flexible film may assist to accommodate shear forces or movement between surfaces, when the volume of the mould cavity is varied. Such additional measures may be of use with various embodiments of disclosed herein, including but not limited to inflatable bladders, compressible "springs" , reconfigurable bladders or the like.

Some embodiments of the adjustment system comprise a resilient biasing arrangement configured to apply a biasing force to urge the first and second moulds apart from one another. The resilient biasing arrangement may comprise one or more resilient biasing members may be disposed within in the peripheral channel defined between the first and second moulds. The resilient biasing arrangement may be disposed and act between the tooling surface and the inner face.

Each resilient biasing member of the resilient biasing arrangement may be a metal or composite spring, such as a coil spring, a folded longitudinal spring, a top hat or the like. It is envisaged that a resiliently deformable polymer may also be used as a resilient biasing member. For example a resilient member such as an "O-ring" or elongate member having any other suitable cross section, may be used. It is envisaged that a resilient member of this type may be a consumable item.

The adjustment system may comprise a lifting mechanism, which may be actuated pneumatically, hydraulically, mechanically or electromechanically or a combination thereof. The lifting mechanism may be operable to exert a force between the first and second moulds to thereby vary the volume of the mould cavity.

The lifting mechanism may act between any part of the moulds, but in some embodiments acts between, optionally directly between, the first mould (for example a frame or housing thereof) and the support structure (for example, but not limited to, the primary elements thereof). The lifting mechanism may comprise one or more hydraulic jacks, or one or more eccentric rollers, gears or cams.

Pneumatic actuation may be provided by compressed air. Hydraulic actuation may be provided via any suitable hydraulic fluid, such as matrix material or a component thereof (e.g. a component of a two part resin system, an uncatalyzed resin or the like), or hydraulic oil.

The components of the lifting mechanism may be positioned around the periphery of the first and second moulds. In certain applications, or for certain manufacturing processes, this may advantageously facilitate sealing of the flexible peripheral region to the tooling surface in a generally conventional manner, and subsequent installation or assembly of components of the lifting assembly. Moreover, the components of the lifting mechanism may be compatible with multiple moulds.

The lifting mechanism may additionally be configured to effect a range of motion between the first and second mould sufficient break the seal between the first and second moulds or open the mould cavity and at least partially release the composite part therefrom, in use.

Reference herein to "lifting" should not be construed as limiting. Whilst typically the second mould will be positioned above the first mould, in some applications the relative orientations may vary.

The adjustment system may further comprise an end-stop, to limit the maximum distance between the first and second moulds. The end stop may be defined by engagement between the support structure and a retaining structure coupled to the first mould. A retaining structure may be positionable over the second mould, during assembly or use of the apparatus. The end stop may be defined by the resilient biasing system.

The apparatus may comprise additional features associated with autoclave or OoA composite manufacturing apparatus, such a matrix material distribution system, comprising supply conduits, manifolds etc. communicating with one or more inlets to the mould cavity and one or more matrix material supplies.

The matrix material supply may be pressurised. The matrix material supply may comprise a vessel for housing a supply of the matrix material. The vessel may be pressurised and/or the system may be adapted for matrix material to be pumped under pressure therefrom. The matrix material supply may be heated, in the supply vessel and or along a flow path between the supply vessel and the mould cavity.

Alternatively, the temperature of the matrix material may be elevated above ambient temperature to a temperature suitable for injection and infusion by conditions within an autoclave or an oven in use, or be maintained at the suitable temperature along a portion of the flow path within the autoclave or oven.

As known to one skilled in the art, matrix material may be injected via inlets through the mould cavity, typically around the layup region. More typically, one or more matrix material inlets may be provided through the stiffened central region, located based on part geometry to facilitate even and rapid distribution of resin across the dry layup, in use.

The apparatus may comprise one or more vacuum ports to the mould cavity, for applying a vacuum thereto. The apparatus may comprise a vacuum system, with one or more associated vacuum conduits, manifolds etc. communicating with a vacuum pump and one or more vacuum ports to the mould cavity.

Alternatively, the mould cavity may be provided with one or more vent ports, via which air can be displaced from the mould cavity during injection.

The one or more vacuum ports or vent ports may be provided through the stiffened central region, located based on part geometry and variations in permeability of the layup, to facilitate rapid removal or displacement of air, and infusion of the layup with matrix material.

The apparatus may form part of a composite manufacturing system, to which the invention disclosed herein extends in a second aspect, further comprising an autoclave or an oven, wherein, as the case may be, at least the first and second moulds are positionable in the autoclave or oven, for compressing and/or heating therein of the infused reinforcement layup. The composite manufacturing system may be adapted for further components of the apparatus to be disposed in said autoclave or oven, as the case may be, such as some or all of the matrix distribution and/or vacuum system.

Further components of the apparatus may be adapted for use in autoclave conditions. For example, apparatus such as of a lifting mechanism, or fluid lines to such apparatus or a bladder, may be insulated. Alternatively, or in addition, fluid supplied to hydraulic or pneumatic apparatus located outside of an autoclave may be cooled.

The composite manufacturing system may comprise one or more further first and second moulds (for manufacture of composite parts having the same or different configurations from one another). The one or more further first and second moulds may share components of the apparatus, such as decoupleable primary elements, matrix material supply vessel, vacuum pump etc.

The invention extends in a third aspect to a mould for use in composite manufacture, having an inner face and an outer face; and comprising:
a stiffened central region, which is adjacent to the mould cavity in use;
a flexible peripheral region extending beyond the stiffened central region; and
a support structure coupled to the outer face.

The flexible peripheral region is configured to seal the mould to another mould having a tooling surface to define a mould cavity, and accommodate variations in the volume of the mould cavity, in use. The flexible peripheral region may form part of a sealing arrangement as disclosed herein.

The mould may be used as the second mould of the apparatus disclosed herein, and may include any further features of the second mould disclosed herein. In some preferred embodiments, the flexible peripheral region comprises an elastomeric bagging material and/or the stiffened central region comprises a composite material. Advantageously, the elastomeric bagging material extends across the mould, e.g. the outer face, and may be laminated or co-moulded to the stiffened central region.

In a fourth aspect of the invention there is provided a method of composite manufacture, comprising the steps of:
providing a layup of dry reinforcement material on the layup region of a tooling surface of a first mould;
sealing a second mould to the first mould to define a mould cavity around the layup; wherein the seal is gas tight; wherein the second mould has an inner face oriented towards the tooling surface and wherein a region of the tooling surface and the inner face define the mould cavity;
providing a gap within the mould cavity between the layup and a inner face of the second mould, while the first and second mould are sealed;
injecting a flowable matrix material into the gap between the layup and the inner face; and
moving the first and second moulds in relation to one another to reduce the volume of the mould cavity while the first and second moulds are sealed to one another, to thereby infuse the layup with the matrix material;
   wherein movement between the first and second moulds in relation to one another to reduce the volume of the mould cavity is effected by a pressure differential between an inside and an outside of the mould cavity.

The method may comprise applying a vacuum to the mould cavity prior to injecting the flowable matrix. Accordingly, the method may comprise maintaining the gap when the mould cavity is placed under vacuum.

As disclosed in relation to the first aspect, the second mould may be configured with sufficient rigidity (by virtue of one or both of a support structure or a stiffened central region) to maintain a gap defined between the inner face and a lay-up (or preform) on the lay-up region, when the mould cavity is placed under vacuum.

The method may comprise laying up the dry reinforcement material on the layup region. As disclosed herein, the reinforcement material may be a fabric, and laying up may comprise laying multiple fabric plies on the layup region (in addition to optional hard tooling, breather material, peel plies or the like). Layup and pre-forming may alternatively be performed on a separate preforming tool, wherein the pre-form is positioned on the layup region subsequently. The layup may include multiple such preforms, or a combination of a layup to be consolidated, and preforms, hard tooling etc.

The method may comprise providing the gap by increasing the volume of the mould cavity. The volume of the mould cavity can be increased by moving the first and second moulds apart from one another, whilst maintaining the seal.

The gap between the second mould and the layup (including any layers such as peel ply thereon) prior to infusion may be of around 1-5 mm, or 1-4 mm or 2-4 mm or around 2 or 3 mm. Correspondingly, the variation in volume of the mould cavity, achieved by movement of the first and second moulds in relation to one another, may be around 1-5 mm, or 1-4 mm or 2-4 mm or around 2 or 3 mm.

The gap may be provided using an adjustment system as disclosed herein. Varying the volume may comprise moving the adjustment system between an extended and a collapsed configuration. Similarly, the sealing arrangement disclosed herein may be adapted to maintain a seal between the first and second moulds within said range of motion thereof. It will be understood that the adjustment system and sealing arrangement may be configured to accommodate a greater range of motion between the first and second moulds, to provide an additional tolerance or margin where required. In particular embodiments, the adjustment system (in particular a lifting mechanism) may be configured to effect a greater, and potentially significantly greater range of motion between the first and second moulds, to break the seal therebetween and/or open the mould cavity to release the composite part.

The first mould and second mould can be moved apart from one another by inflating an inflatable bladder disposed therebetween.

The method may comprise, after sealing the first mould to the second mould, reducing a volume of the mould cavity to compress or consolidate the dry layup. Reducing the volume of the mould cavity may be achieved by moving the first and second moulds closer together.

The gap may be provided by subsequently increasing the volume of the mould cavity.

Reducing the volume may comprise creating a pressure differential between the inner face and an outer face of the second mould, between the inside and an outside of the mould cavity.

Creating the pressure differential may comprise reducing a pressure in the mould cavity by applying a vacuum thereto and/or by increasing an external pressure, for example in an autoclave.

Creating a pressure differential to compress or consolidate the dry layup may comprise applying a vacuum to the mould cavity, wherein an outside of the mould cavity is at ambient atmospheric pressure. Creating a pressure differential to infuse the preform, following injection of the matrix material, may comprise one or both of applying a vacuum to the mould cavity or increasing an external pressure in an autoclave.

The matrix material may be injected into the cavity via a single injection port, or multiple injection ports. Vacuum may be applied, or air vented, from the mould cavity via multiple vacuum ports or vent ports, as the case may be.

The method may comprise injecting matrix material, applying a vacuum or venting air via respective injection, vacuum or vent ports through the second mould, or stiffened central region thereof.

The method may comprise heating the matrix material before, during and/or after injection into the cavity. The matrix material may be heated before and/or during injection and/or infusion to reduce the viscosity of the matrix material. The rate of injection and infusion can thereby be improved. Moreover, for some matrix material and reinforcement material systems, reduced viscosity can improve wetting out of the reinforcement material, lower the risk of dry regions and voids, etc. A typical temperature for the matrix material when injection is in the region of 60°C-140°C, or 80°C to 120°C. For curable matrix materials in particular the injection temperature may be a balance between lowering the viscosity to facilitate injection, and the available time before onset of gelation.

The method may comprise heating the matrix material in an autoclave or an oven. For example, wherein at least the first and second moulds of the apparatus disclosed herein is positioned in said autoclave or oven.

The method may comprise heating the matrix material in a matrix material source vessel.

The method may comprise heating the first and/or second tool, to thereby heat the mould cavity and the matrix material therein.

The method may comprise heating the matrix material, after infusion, to cure the matrix material.

The method may comprise cooling the infused layup, optionally after curing. Cooling may be conducted in the mould cavity.

The method may comprise opening the mould. The mould may be opened using an adjustment system as disclosed herein, in particular a lifting mechanism.

The term "heating" herein includes input of heat energy to maintain a temperature or increase the temperature to a target temperature or to follow a predetermined temperature cycle, e.g. a cure cycle.

The term "lay-up" herein includes dry reinforcement material positioned on a lay-up region of a tooling surface. The dry reinforcement material may comprise a fibrous material. The dry reinforcement material may be a fabric material, including woven, non-woven, unidirectional, non-crimp of the like. The dry reinforcement may comprise for example carbon fibres, glass fibres, aramid fibres or a mixture thereof as known to one skilled in the art.

The term "pre-form" herein refers to a dry reinforcement material having been laid up and compressed or consolidated to some degree, to provide a greater degree of structural integrity to the reinforcement material. A pre-form will typically have a lower bulk factor than an initially laid up reinforcement material and, as known to one skilled in the art, may have sufficient structural integrity to be transferred between workstations (e.g. from one tooling surface to another). A pre-form will possess dimensions that generally correspond to a final composite part, or a component thereof but may differ for example in thickness, curvature or the like. As known in the art, a pre-form may possess a degree of flexibility to permit some re-shaping or indeed so as to require structural support during handling. In many applications a reinforcement material will be coated with a binder, for example in powder form, whereby heating and/or consolidation pressure may activate the binder and provide a degree of bonding between fibres or plies of reinforcement material - thus restricting movement between fibres or plies and conveying said structural integrity. A composite part may include more than one pre-form and the pre-forms may be infused in a common infusion process.

The term "dry" refers to an absence of matrix material, but does not exclude the presence of surface treatments of the reinforcement material such as sizing, as might be present to enhance or preserve the physical properties of fibrous reinforcement material, or binder, as might be present to facilitate lay-up, or the like.

The matrix material, which may be referred to generally as a "resin" in the context of resin transfer infusion and related methods, may be any suitable matrix material or precursor that can be made to be flowable so as to infuse the reinforcement material and subsequently treated (e.g. cured or otherwise reacted, solidified etc) to form a composite part, as known to one skilled in the art. The matrix material may be a curable matrix material, such as an epoxy, a polyurethane or the like - that is uncured or un-crosslinked when injected, and then subsequently cured or crosslinked. The matrix material may be a settable material, such as a thermoplastics material. The matrix material may comprise one or more additives, such as filler, plasticiser UV scavengers or the like. The matrix material may be a multi-component matrix material, comprising for example a mixture of thermoplastics, or a mixture of resins to be co-cured or cross linked. A curable matrix material may comprise or even require a catalyst to promote the curing reaction.

The term "laterally" refers to a direction or orientation generally along the tooling surface and generally normal to a direction in which the moulds move in relation to one another to vary the volume of the mould cavity.

The term "gas tight" herein refers to a seal or barrier through which permeation or flow of gas is prevented (excepting de minimis leakage or permeation) under the pressure differentials across the seal or barrier encountered in use.

The invention can also be understood with reference to the embodiments set out in the following numbered clauses:
Clause 1. A method of composite manufacture, comprising the steps of:
   providing a layup of dry reinforcement material on the layup region of a tooling surface of a first mould;
   sealing a second mould to the first mould to define a mould cavity around the layup; wherein the seal is gas tight; wherein the second mould has an inner face oriented towards the tooling surface and wherein a region of the tooling surface and the inner face define the mould cavity;
   providing a gap within the mould cavity between the layup and a inner face of the second mould, while the first and second mould are sealed;
   injecting a flowable matrix material into the gap between the layup and the inner face; and
   moving the first and second moulds in relation to one another to reduce the volume of the mould cavity while the first and second moulds are sealed to one another, to thereby infuse the layup with the matrix material;
      wherein movement between the first and second moulds in relation to one another to reduce the volume of the mould cavity is effected by a pressure differential between an inside and an outside of the mould cavity.
Clause 2. The method of clause 1, comprising applying a vacuum to the mould cavity prior to injecting the flowable matrix; and maintaining the gap when the mould cavity is placed under vacuum.
Clause 3. The method of clause 1 or 2, comprising laying up the dry reinforcement material on the layup region.
Clause 4. The method of any preceding clause, comprising providing the gap by increasing the volume of the mould cavity, wherein the volume of the mould cavity is increased by moving the first and second moulds apart from one another, whilst maintaining the seal.
Clause 5. The method of any preceding clause, wherein the gap between the second mould and the layup prior to infusion is around 1-5 mm, 2-4 mm or around 2 or 3 mm.
Clause 6. The method of any preceding clause, comprising moving the first and second moulds apart from one another by inflating an inflatable bladder disposed therebetween.
Clause 7. The method of any preceding clause, comprising moving the first and second moulds apart under the action of an adjustment system.
Clause 8. The method of any preceding clause, comprising, after sealing the first mould to the second mould, reducing a volume of the mould cavity to compress or consolidate the dry layup.
Clause 9. The method of clause 8, wherein the gap is provided by subsequently increasing the volume of the mould cavity.
Clause 10. The method of any preceding clause, wherein the step or steps of reducing the volume comprise creating a pressure differential between the inside and an outside of the mould cavity.
Clause 11. The method of clause 10, wherein the pressure differential comprises reducing a pressure in the mould cavity by applying a vacuum thereto and/or by increasing an external pressure.
Clause 12. The method of any preceding clause, comprising heating the matrix material before, during and/or after injection into the cavity.
Clause 13. The method of clause 12, comprising heating the matrix material in an autoclave or oven, wherein at least the first and second moulds are positioned in said autoclave or oven.
Clause 14. The method of clause 12 or 13, comprising heating the matrix material, after infusion, to cure the matrix material.
Clause 15. An apparatus for infusing a lay-up of reinforcement material with a matrix material, the apparatus comprising:
   a first mould, having a hard tooling surface with a lay-up region;
   a second mould having an inner face; wherein the first mould is sealable to the second mould to define a mould cavity that is defined between the lay-up region and the inner face;
   a sealing arrangement, for forming a gas-tight seal between the first and second moulds, around a periphery of the lay-up region;
      wherein the sealing arrangement is adapted to accommodate variations in the volume of the mould cavity whilst maintaining the seal between the first and second moulds; and
   an adjustment system arranged at least partly around the lay-up region adapted to vary the volume of the mould cavity or permit the volume of the mould cavity to vary, under the action of forces acting between the first mould and the second mould.
Clause 16. The apparatus of clause 15, wherein the second mould is configured with sufficient rigidity to maintain a gap defined between the inner face and a lay-up on the lay-up region, when the mould cavity is placed under vacuum, wherein the gap is between around 1-5 mm, 2-4 mm or around 2-3 mm.
Clause 17. The apparatus of clause 15 or 16, configured to have an uncompressed configuration, and a compressed configuration, wherein the volume of the mould cavity and a distance between the inner surface and the layup region in the uncompressed configuration is greater than in the compressed configuration:
   wherein, the adjustment system has an extended state, in which the apparatus is maintained in the uncompressed configuration, and a collapsed state, in which the apparatus is in the compressed configuration; and
   wherein the adjustment system is operable to be moved to the collapsed state under the action of a pressure differential applied between the mould cavity and an outside of the mould cavity.
Clause 18. The apparatus of clause 17, wherein the adjustment system is operable to be moved between the collapsed state and the extended state to increase the volume of the mould cavity and place the apparatus in the uncompressed configuration.
Clause 19. The apparatus of clause 17 or 18, wherein the adjustment system is configured to maintain the apparatus in the uncompressed configuration against a pressure differential between the mould cavity and an outside of the mould cavity of at least around 6-8 Bar.
Clause 20. The apparatus of any one of clauses 15 to 19, wherein second mould includes a support structure coupled to the outer face of the mould, the support structure comprising a plurality of support elements extending across the outer face.
Clause 21. The apparatus of clause 20, comprising one or more primary elements, to which the support element or elements are releasably attached by releasable fixings.
Clause 22. The apparatus of clause 21, wherein the one or more primary elements extend laterally beyond the support elements, and are operatively coupled to the actuation system.
Clause 23. The apparatus of any one of clauses 15 to 22, wherein the second mould comprises a stiffened central region, which is adjacent to the mould cavity in use; and a flexible peripheral region extending beyond the stiffened central region, the flexible peripheral region forming part of the sealing arrangement and configured to seal the second mould to the first mould and accommodate variations in the volume of the mould cavity, in use.
Clause 24. The apparatus of clause 24, wherein the second mould comprises a stiff plastics or composite layer laminated to an elastomeric bagging layer across at least the stiffened central region.
Clause 25. The apparatus of clause 24 or 25, wherein the elastomeric bagging layer comprises the flexible peripheral region.
Clause 26. The apparatus of any one of clauses 23 to 25, wherein the sealing arrangement comprises an excess of the flexible peripheral region between the primary sealing arrangement and the stiffened central region.
Clause 27. The apparatus of any one of clauses 15 to 26, wherein the adjustment system comprises one or more inflatable bladders disposed between the first and second moulds around a periphery of the mould cavity.
Clause 28. The apparatus of clause 27, when dependent on clause 24, 25 or 26, wherein the one or more inflatable bladders are disposed around a periphery that is concentrically within the flexible peripheral portion.
Clause 29. The apparatus of any one of clauses 15 to 26, wherein the adjustment system comprises one or more reconfigurable bladders containing a meltable medium, disposed between the first and second moulds around a periphery of the mould cavity.
Clause 30. The apparatus of clause 29, when dependent on clause 24, 25 or 26, wherein the one or more reconfigurable bladders are disposed around a periphery that is concentrically within the flexible peripheral portion.
Clause 31. The apparatus of clause 29 or 30, wherein the meltable material comprises a eutectic material.
Clause 32. The apparatus of any one of clauses 15 to 26, wherein the adjustment system comprises a resilient biasing arrangement configured to apply a biasing force to urge the first and second moulds apart from one another, the resilient biasing arrangement comprising one or more resilient biasing members disposed and acting between the tooling surface and the inner face.
Clause 33. The apparatus of any one of clauses 15 to 26, wherein the adjustment system comprises a lifting mechanism, actuated pneumatically, hydraulically, mechanically or electromechanically or a combination thereof; the lifting mechanism operable to exert a force between the first and second moulds to thereby vary the volume of the mould cavity.
Clause 34. The apparatus of clause 33, when dependent on clause 20, wherein the lifting mechanism acts between the first mould and the support structure.
Clause 35. The apparatus of clause 33 or 34, wherein the lifting mechanism comprises one or more hydraulic jacks, or one or more eccentric rollers, gears or cams.
Clause 36. The apparatus of any one of clauses 33 to 35, wherein components of the lifting mechanism are positioned around the periphery of the first and second moulds.
37. A composite manufacturing system comprising the apparatus of any one of clauses 15 to 36, and further comprising an autoclave, wherein at least the first and second moulds are positionable in the autoclave, for compressing and/or heating therein of the infused reinforcement layup.
Clause 38. A mould for use in composite manufacture, having an inner face and an outer face; and comprising:
   a stiffened central region, which is adjacent to the mould cavity in use;
   a flexible peripheral region extending beyond the stiffened central region; wherein the flexible peripheral region is configured to seal the mould to another mould having a tooling surface to define a mould cavity, and accommodate variations in the volume of the mould cavity, in use; and
   a support structure coupled to the outer face.

It will be understood that various aspects and embodiments have been disclosed, and that features disclosed in relation to one aspect or embodiments are contemplated in connection with any other aspect or embodiment, unless expressed specifically as an alternative. Furthermore, it is contemplated that the method may include steps described in description of the use of the apparatus of the aspects and embodiments disclosed herein.

### DESCRIPTION OF THE DRAWINGS

Non-limiting examples will now be describe with reference to the following figures in which:
Fig. 1 shows a schematic cross sectional view of an apparatus in accordance with the invention in a compressed configuration;
Figs. 2 and 3 show schematic cross sectional views of the apparatus of Fig. 1 in an uncompressed configuration; at successive stages of use;
Figs. 4 and 5 show schematic cross sectional views the apparatus of Fig. 1 in compressed and uncompressed configurations, respectively, with an infused layup in the mould cavity;
Figs. 6(a)-(g) show cross sectional profiles of inflatable or reconfigurable bladders;
Fig. 7 shows a perspective view of an alternative apparatus in accordance with the invention;
Fig. 8 shows a schematic cross sectional view of another apparatus in accordance with the invention having a lifting mechanism, in a compressed configuration;
Fig. 9 shows a schematic cross sectional views of the apparatus of Fig. 8 in an uncompressed configuration;
Figs. 10 and 11 show schematic cross sectional views of a still further apparatus in accordance with the invention having a eutectic bladder, in an uncompressed configuration; in successive stages of use;
Fig. 12 shows a schematic cross sectional view of the apparatus of Figs. 10 and 11 in a compressed configuration;
Fig. 13 shows a schematic cross sectional views of a still further apparatus in accordance with the invention having an array of biasing elements, in an uncompressed configuration;
Fig. 14 shows a perspective view of an embodiment of a lifting mechanism;
Figs. 15(a) and 15(b) show cross sectional views of a mould;
Figs. 16(a) and 16(b) show perspective cut out views of (a) the support structure and (b) of the second mould of the apparatus shown in Fig. 7;
Figs. 17(a) and 17(b) show end profiles and excess bagging material of the stiffened central region of a mould in accordance with the invention; and
Fig. 18 shows an alternative array of support elements of a support structure.

### DETAILED DESCRIPTION OF EXAMPLE EMBODIMENTS

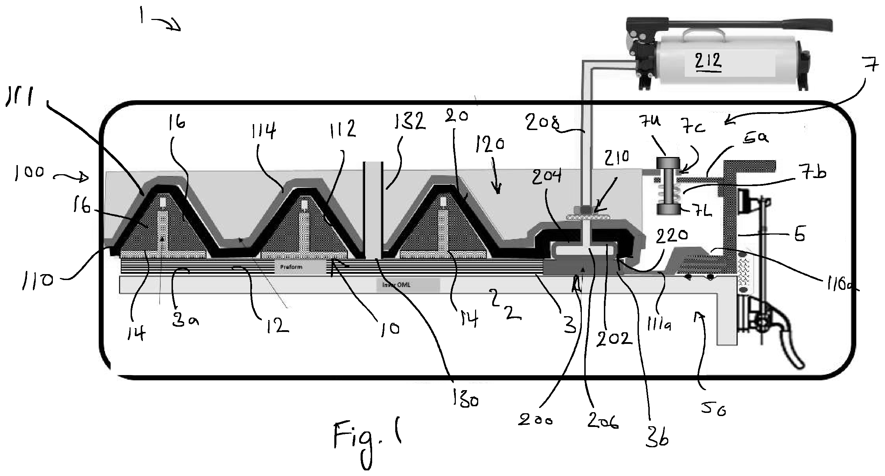

Fig. 1 shows a schematic cross sectional view of an apparatus 1 in accordance with the invention. The apparatus includes a first mould 2 having a hard tooling surface 3. The tooling surface 3 is composed in the embodiment shown of a low CTE material such as Invar.

A layup 10 comprising a skin 12 of dry reinforcement material has been laid up on a layup region 3a of the tooling surface 3. The reinforcement material in the example shown includes sheets of a dry fabric material, such as carbon fibre fabric. The layup in the example shown also includes separate preforms 14 (which, in the example shown will form stiffening elements for the skin 11) a and hard tooling 16 to support and define selected geometries of the composite part to be formed. The stiffening element preforms 14 have been separately laid up and typically also consolidated (i.e. compressed to reduce bulk factor), and transferred to the layup region 3a, and the hard tooling 14 placed thereon.

The apparatus 1 further includes a second mould 100. The second mould 100 includes a stiffened central region 110, with a inner face 112 oriented towards the layup and the tooling surface 3 and an opposite outer face 114. The central region 110 is formed, in the embodiment, shown, of a carbon fibre composite material provided with an elastomeric coating on the inner face. The second mould 100 in the embodiment shown includes a layer of co-cured rubber bagging material 111. The bagging material 111 extends to a form a flexible peripheral region 111a around the stiffened central region 110, however other constructions as known to one skilled in the art may also be used.

The second mould 100 has a support structure 120 coupled to the outer face 114. A vacuum port 130 and vacuum line 132 extend through the central region 110. The vacuum port is shown centrally for illustrative purposes, but can be positioned in any suitable location as required for a particular purpose. Multiple vacuum ports may be provided. In some embodiments, the first tool may include one or more vacuum ports..

The inner face defines a mould line that conforms to the desired configuration of the desired composite part. Further details of the construction of the second mould and the support structure are below.

The second tool 100 is sealed to the first tool 2 via a sealing arrangement, generally indicated as 50.

An outer frame 5 (a "Z-member") of the apparatus 1 is clamped to the first mould 2 and sealed to the fooling surface 3 in a conventional arrangement. The periphery 110a of the flexible peripheral region 111 is sealed to the outer frame 5 using vacuum tape. An excess of bagging material 110b is between the taped periphery 110a and the adjustment system 200 discussed below, to facilitate variation in the distance between the first and second moulds as discussed further below.

The sealing arrangement 50 extends around the layup region, and a mould cavity 20 containing the layup 110 is defined therebetween. The sealing arrangement 50 provides a gas tight seal around the mould cavity 20.

An adjustment system, indicated generally as 200, is disposed between a peripheral bar 3a around the tooling surface 3, and the inner face 112.

The adjustment system 200 includes an inflatable bladder 202 having a flexible elastomeric outer 204 and an internal cavity 206. A hydraulic fluid line 208 extends through a port 210 in the central region 110, to a hydraulic pump 212. In the embodiment shown, the inflatable bladder 202 is located in a pocket or channel 220, which helps to retain the position of the bladder as it changes dimensions in use, as discussed below.

The outer frame 5 includes a resilient biasing system 7, including in the example shown in each of a series of positions around the apparatus 1, a spindle 7a and coil spring 7b extending through an aperture 7c in a top plate 5a. The spring 7b acts between the underside of the top plate 5a and a lower flange 7L. A part of the support structure 120 extends between the upper side of the top plate 5a and an upper flange 7U. The biasing system provides a pressure between the inflatable bladder 202 and the moulds 2, 100 to maintain engagement therebetween. The range of motion is limited by the flanges 7U and 7L such that the system 7 also functions as an end stop for a range of motion of the second mould 100 in relation to the first mould 2 in use.

The apparatus in Fig. 1 is shown in a compressed configuration in which the adjustment system is in a collapsed state. The inflatable bladder 202 is unpressurised and a vacuum has been applied to the mould cavity 20 via the vacuum port 130, to remove air, create a pressure differential and thereby cause the layup to be compressed and the skin 12 consolidated. During this process, optionally the mould cavity may be heated, either by positioning the apparatus 1 in an oven or via heating means (not shown) associated with the apparatus or embedded in the first tool, for example.

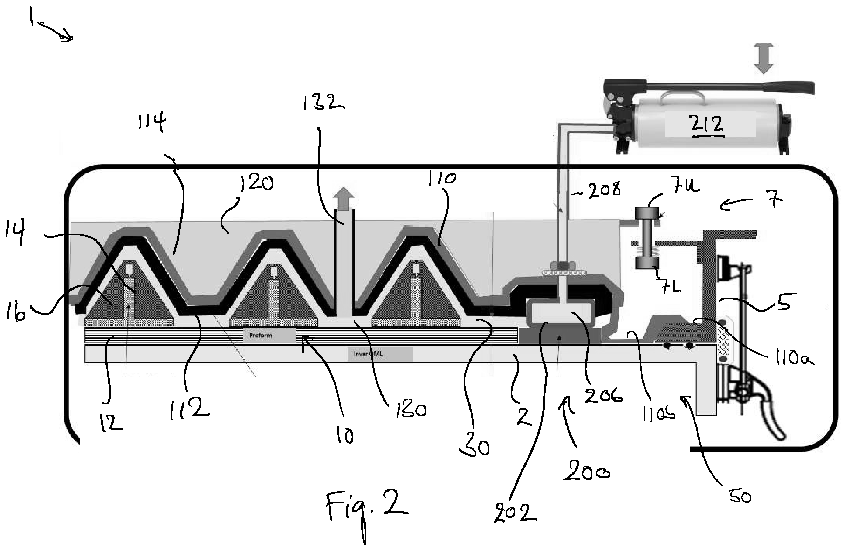

Fig. 2 shows a subsequent stage of the method disclosed herein, using the apparatus 1. The inflatable bladder 202 is inflated by activating the pump 212, causing hydraulic fluid (conveniently uncatalyzed resin) to enter and expand the channel 206. The first and second moulds 2, 100 are thereby urged apart - typically by 2-3mm - to create a gap 30 between the layup 3 and the inner face 112, in the mould cavity 20. The seal formed by the sealing arrangement 50 is maintained throughout. Excess bagging material 110b reduces any tension that might otherwise be transferred to either side. Vacuum is normally also maintained throughout. The stiffness of the central region 110, provided by the composite construction and the support structure 120 helps to "lift" the inner face 112 away from the layup and to form the gap 30.

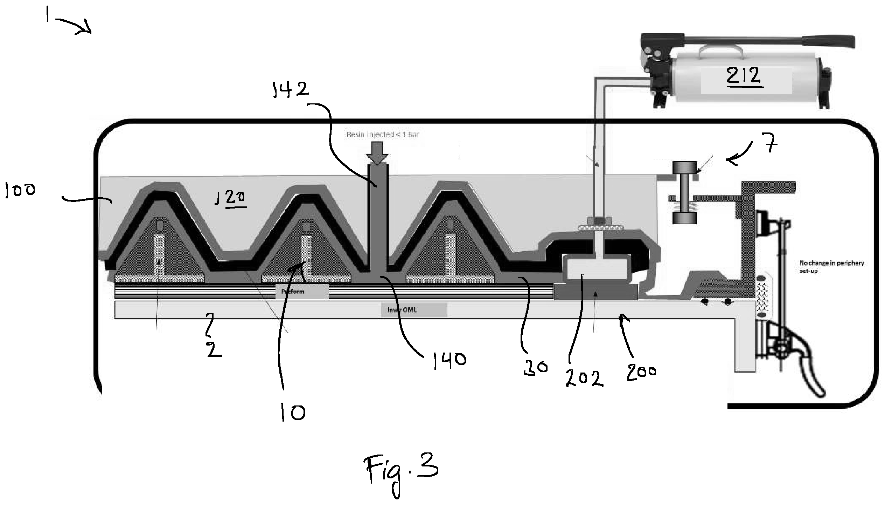

Fig. 3 shows a next stage of the method, using the apparatus 1, in which resin has been injected into the mould cavity via a resin line 142 and an injection port 140 through the central region 110. Whilst the resin line and injection port are depicted centrally for illustrative purposes, injection ports can be positioned in any suitable location as required for a particular purpose. Moreover, while a vacuum port is not shown in the schematic Fig. 3 vacuum is typically maintained during injection of resin to assist in removing volatiles and any displaced air.

Resin is typically heated prior to injection to reduce viscosity, using conventional apparatus that will not be further described. The temperature of the resin in the cavity may be maintained during and subsequent to injection by heating one or both tools, using an external heater or placing the apparatus in an oven or autoclave.

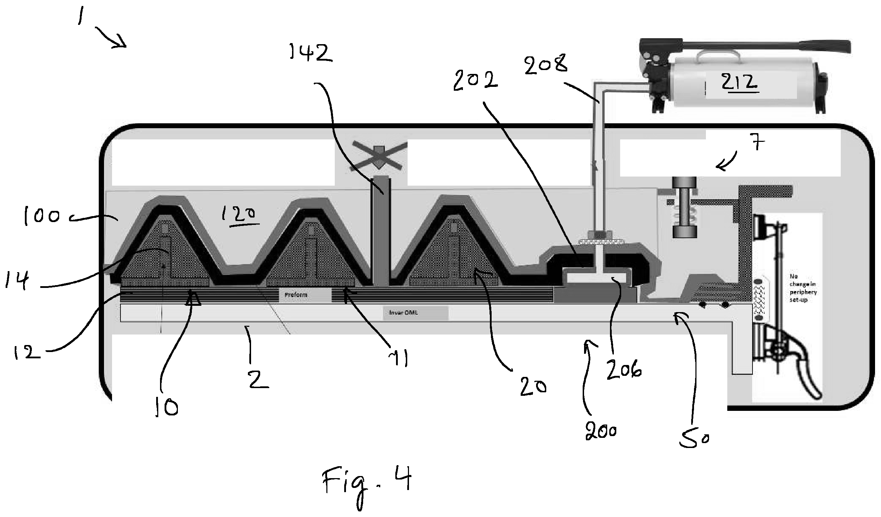

As shown in Fig. 4 in a further stage of the method, resin injection is complete (and the resin line 142 closed). The pump 212 is de-energised such and, under the action of a pressure differential between the mould cavity 20 and an outside of the mould cavity (to which the outer face is exposed), the second tool 100 is urged towards the first tool 2 to reduce the volume of the mould cavity 20 and infuse the resin previously in the gap 30 through the thickness of the preforms 12, 14 in the cavity to result in an infused part 11. During this process, hydraulic fluid is displaced from the channel 206 of the inflatable bladder 202, placing the adjustment system in the collapsed state, but the seal between the moulds provided by the sealing arrangement 50 is maintained. The apparatus 1 is shown in Fig. 4 in the compressed configuration.

The pressure differential may, in OoA applications, result from the applied vacuum. The pressure differential may alternatively or additionally be provided in an autoclave. In either case the stiffness across the central region 110 promotes even infusion and dimensional consistency of composite parts made by the invention disclosed herein.

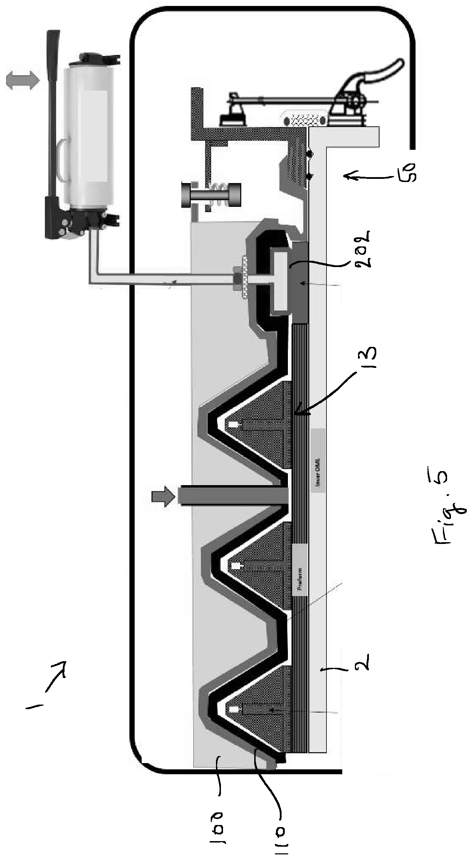

The infused part 11 can be subsequently heated and subject to a temperature cycle to cure or otherwise process the resin, and then cooled (for thermoplastics, to solidify or set the resin), thereby forming the composite part 13. In a further stage of the method shown in Fig. 5, typically following removal of the apparatus 1 from the autoclave or oven, and closure of any vacuum lines, the inflatable bladder 202 is again inflated to lift the second tool 100 from the first tool 2.

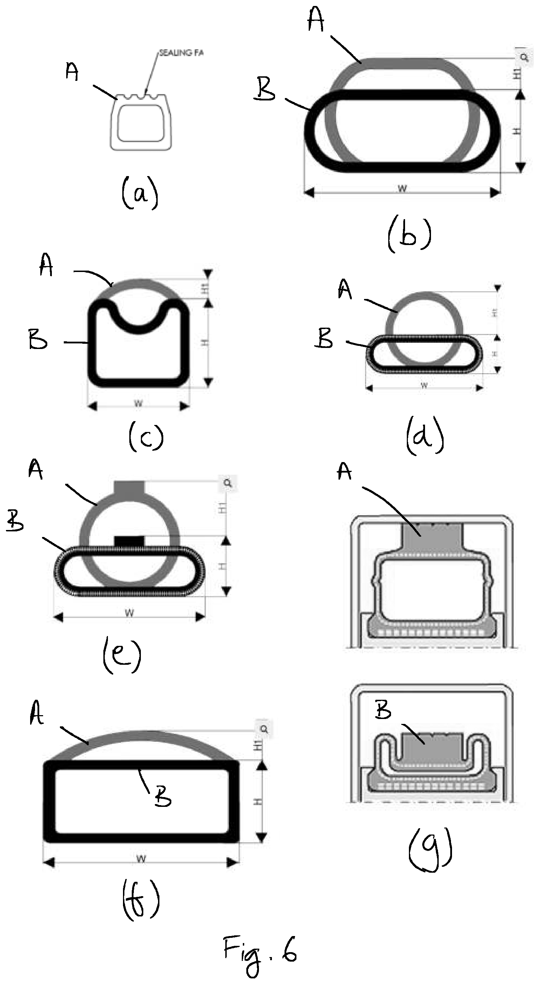

The invention is not limited to any particular inflatable bladder configuration, and various optional cross sectional profiles are illustrated in Fig. 6(a)-(g). Inflated cross sections are labelled "A" and compressed or deflated cross sections are labelled B. These configurations may also be used for reconfigurable bladders.

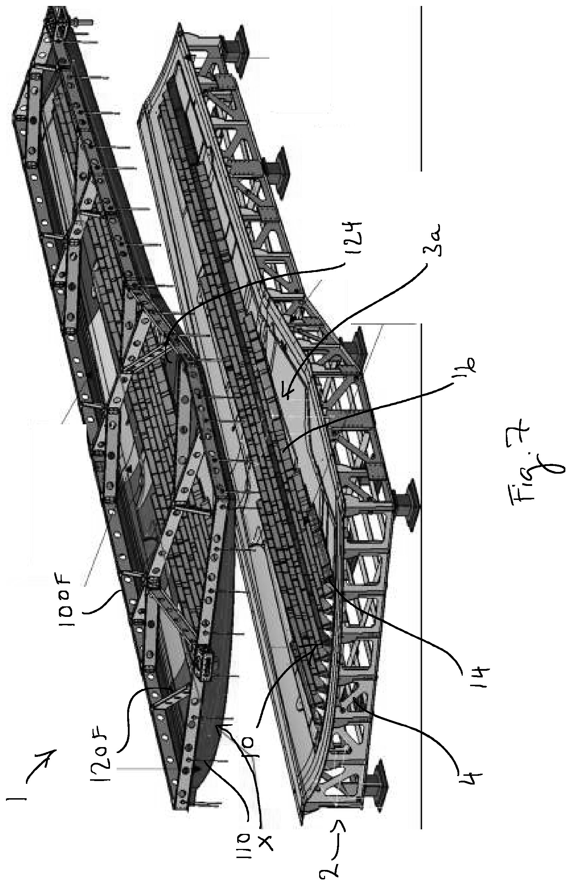

A perspective view of an apparatus 1 in accordance with the invention is shown in Fig. 7 having an alternative second mould 100F. The hard tooling surface 3 of the fist mould 2 is supported on a frame 4. The layup 10 is shown on the layup region 3a, including the hard tooling 16. In the embodiment shown, the apparatus is adapted for manufacture of an aircraft wing skin component and the tooling surface is accordingly concave and shaped accordingly. The preforms 14 are elongate stringers and the hard tooling 16 consists of corresponding stringer mandrel, in the example shown. Of course, the apparatus and methods disclosed herein can be applied to composite manufacture in general and thus to many other composite parts.

The second mould 100F includes the support structure 120F attached to the stiffened central region 110. The support structure 120F includes a series of primary elements 122 forming a frame, coupled to an array of ribs (not shown) and in turn to a series of support panels 124 which together reflect the profiled of the layup 10 oriented towards the inner face of the mould 100, including recesses to accommodate the hard tooling. The support panels 124 are advantageously coupled or bonded to the composite of the region 110The pocket 220 is not visible in the view of Fig. 7, but the line X depicts the location of the inflatable bladder 202 (and pocket 220) when the apparatus is assembled as in the earlier figures.

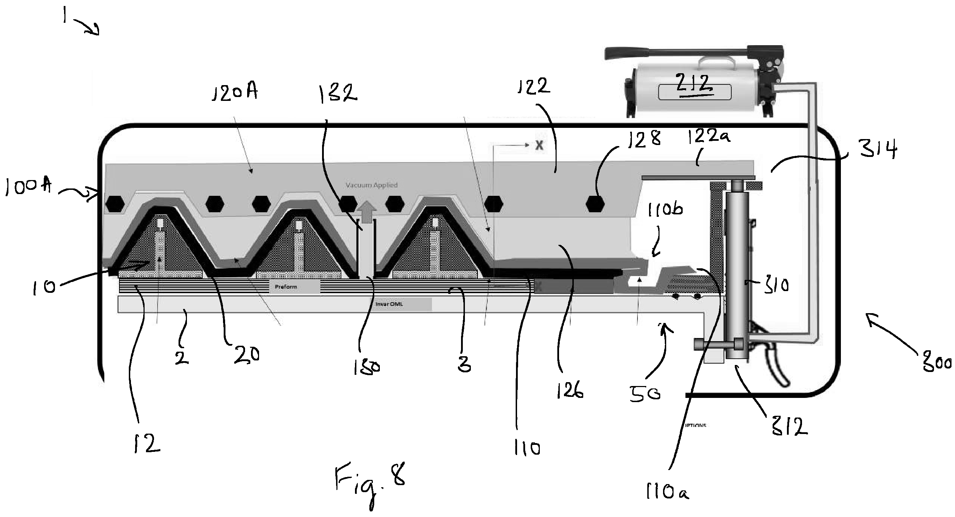

An alternative apparatus 1A is shown in Fig. 8. Features in common with the apparatus 1A are provided with like reference numerals. The apparatus 1A includes a first mould 2 having a hard tooling surface 3. A layup 10 is again depicted on the layup region 3a. The second mould 100A includes a central region 110, with an inner face 112 oriented towards the layup and the tooling surface 3 and an opposite outer face 114.

The second mould 100A has a support structure 120A coupled to the outer face 114. A vacuum port 130 and vacuum line 132 extend through the central region 110. The support structure 120A includes support elements 126, in the form of an array of parallel ribs (only one of which can been seen in the schematic view of the figure) and primary elements 122, both of which extend across the mould 100. Releasable couplings (bolts) 128 attach the support and primary elements 126, 122 such that the primary element 122 can be removed as required to limit the mass and overall dimensions of apparatus to be moved and then heated in and oven or autoclave later in the manufacturing process.

The sealing arrangement 50 includes vacuum tape around the periphery 110a of the bag 110, and excess material in the region 110b concentrically within, as previously described.

The apparatus 1A includes an adjustment system 300, in the form of a lifting system. The lifting system 300 includes a series of easily fitted hydraulic jacks 310 arranged around the first tool 2, each of which are coupled at a lower end 312 to the frame 4, and at an upper end 314 to an outer extension 122a of a corresponding primary element 122. Flow and pressure of hydraulic fluid is regulated via the pump 212.

Analogous to the conditions shown in Fig. 1, the apparatus in Fig. 8 is shown in a compressed configuration in which the a vacuum has been applied to the mould cavity 20 via the vacuum port 130, to remove air, create a pressure differential and thereby cause the layup to be compressed and the skin 12 consolidated.

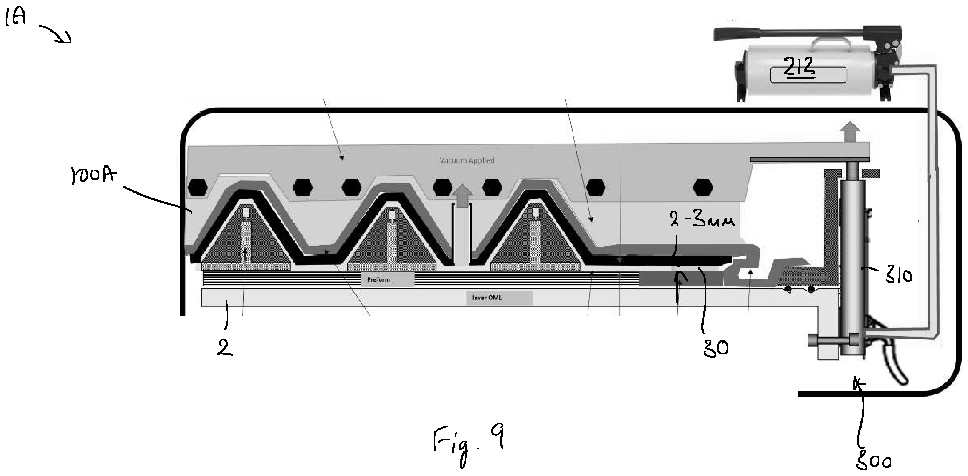

In a subsequent stage illustrated in Fig. 9, the lifting mechanism 300 is actuated to extend the hydraulic jacks 310 by 2-3mm and create the gap 30. Resin can be injected and infused, and subsequently processed generally as previously described.

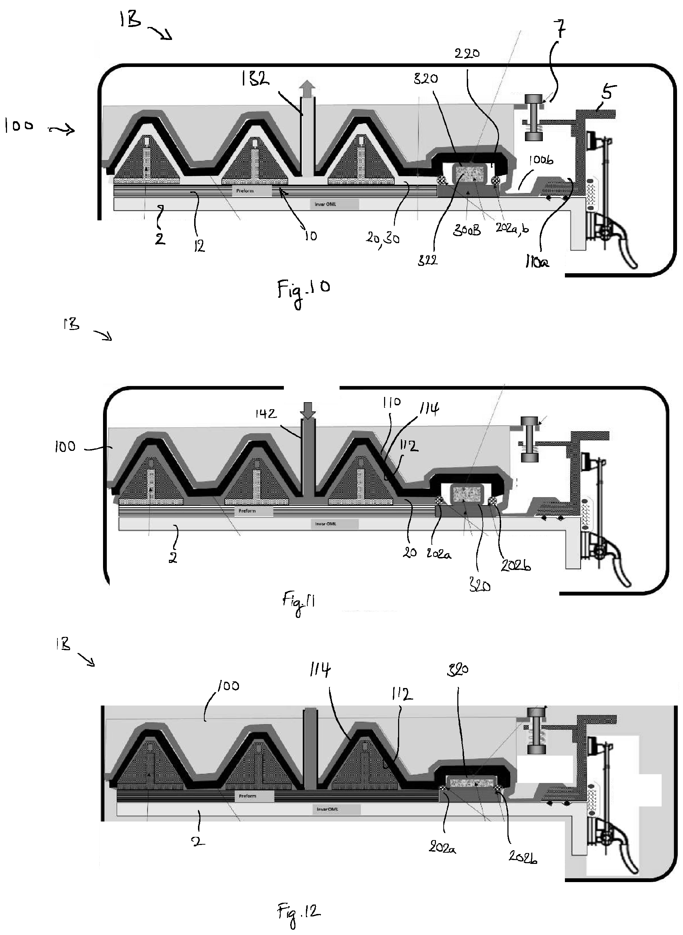

A further example of an apparatus 1B in accordance with the invention is shown in Fig. 10, in an uncompressed configuration. Features in common with the apparatus 1 are provided with like reference numerals. The Apparatus 1B has a first mould 2 and a second mould 100 having the features previously described with reference to Fig.1. The periphery 110a of the region 111 is taped to the outer frame 5 and excess bagging material 110b is provided between the periphery 110a and the stiffened central region 110, as previously described.

An adjustment system 300B includes a tubular bladder 320 having an internal cavity 322 filled with a eutectic material selected to have a eutectic point at a temperature above ambient temperature but below the temperature of the apparatus during resin infusion. The bladder 320 is located in a pocket 220. Compressible seals 202a and 202b are provided adjacent to and concentrically inside and outside of the pocket 220, to provide a further resin barrier.

The layup 10 includes and already consolidated and pre-formed skin 12. The preforms 14, 16 can be prepared separately or the first and second moulds may themselves be used to preform at least the skin 12 in an otherwise conventional process, before the seal between the moulds is broken to install the adjustment system 300B.

The moulds 2, 100 are maintained in the spaced apart uncompressed configuration shown at ambient temperature with the eutectic material in a solid phase. Resin can then be injected (Fig. 11) and, either by virtue of an oven temperature or conduction from heated resin, the temperature of the eutectic material rises. During injection a pressure differential is established between the mould cavity 20 and the outer face 114 of the second mould 100 as previously described. When the eutectic material reaches the eutectic point, the material melts and the bladder 320 reconfigures as the moulds 2, 100 move towards one another under the action of the pressure differential, and the preforms 12, 14 are infused (Fig. 12). The seals 202a, 202b are compressible to the extent required to accommodate the required range of motion between the moulds 2, 100.

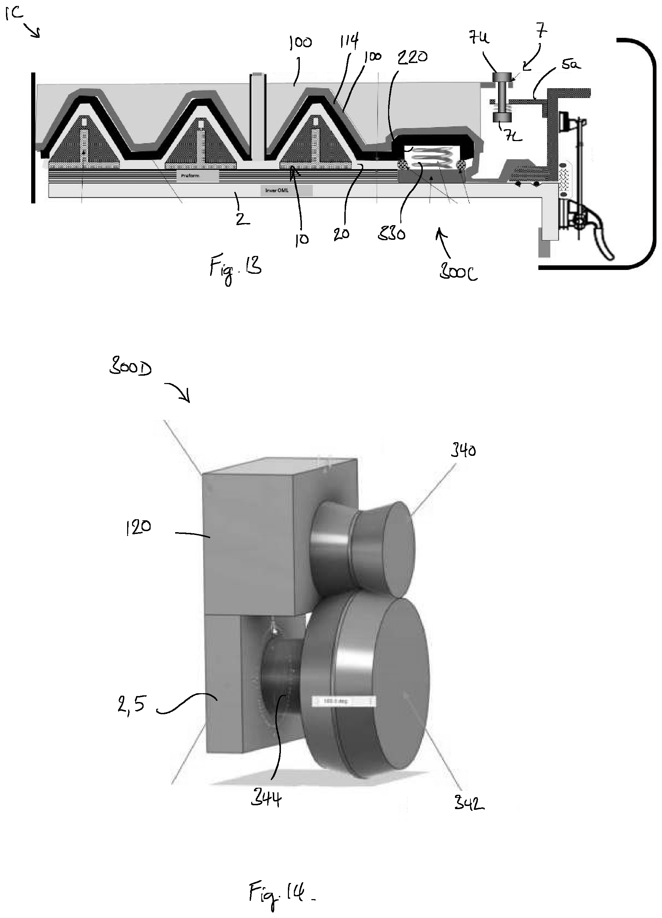

Another apparatus 1C in accordance with the invention is shown in Fig. 13, with feature common to other examples provided with like reference numerals. The apparatus 1C differs from the apparatus 1B in having an alternative adjustment system 300C. The adjustment system 300C includes an array of biasing elements, in the form of coiled springs 330, positioned in the pocket 220. The force exerted by the springs 330 greatly exceeds the counter force exerted by the biasing system 7, such that when the first and second moulds 2, 100 are sealed together to enclose the layup 10 in the mould cavity 20 in ambient conditions, the end stop defined by the engagement with the lower flange 7L with the spring 7U and the plate 5a limits the distance between the first and second moulds and a gap 30 is defined above the layup 10 in the cavity 20.

Injection and infusion can be then achieved generally as previously described, wherein the volume of the internal cavity is reduced in an autoclave once the pressure differential between the mould cavity and the outside of the cavity (in particular the outer face 114) exceeds a predetermined threshold and overcomes the biasing force of the adjustment system 300C.

Whilst coil springs 330 are shown, various alternative biasing elements may be used as disclosed above.

An alternative adjustment system, lifting mechanism 300D is shown in Fig. 14. A roller 340 and eccentric cam 342 are rotatably secured to the first tool 2 (e.g. the outer frame 5) and the support structure 120. The eccentric cam 342 coupled to a drive shaft 344. In some examples the cam 342 is circular in cross section, with the axes of the drive shaft and cam offset. Alternatively, the cam 344 has an eccentric outer profile.

The drive shaft 344 is powered by a drive system (not shown), which can be hydraulic, mechanical or electromechanical, as known to one skilled in the art. As the cam 342 is rotated the vertical distance (in the orientation shown) between the axis of the drive shaft 344 and the uppermost part of the cam 342 varies.

One of the cam or roller may be provided with a convex profile (as for the cam 342 in the embodiment shown) and the other a concave profile (as for the roller 340 in the embodiment shown) to maintain alignment therebetween.

The cams and rollers may, in embodiments of an apparatus in accordance with the invention, be positioned around the apparatus for example in place of the hydraulic rams described above. In use of such apparatus, the lift mechanism 300D may be operated to separate the mould and create a gap as required, then rotated further to allow the moulds to be urged closer together under the action of a pressure differential.

The various means for adjusting the volume of the mould cavity can have particular benefits depending on their circumstances of use. For example an inflatable seal disposed around the periphery of the layup can provide a particularly even distribution of force to the second tool, and offer comparatively simple assembly of the equipment in use. The steps of use are also comparable to some existing RTI methods and thus may reduce the need for training of personnel. Lifting mechanisms, though necessitating a separate sealing arrangement offer apparatus longevity, and access for maintenance, for applications where elastomeric materials may require frequent replacement for example. Moreover hydraulic fluid is contained in such applicants and contamination risk is low. Reconfigurable (e.g. eutectic) seals and resilient biasing members (e.g. springs) are comparatively simple to use and may be preferred for some autoclaving applications and may be attractive where separate preforming is in any case required prior to injection, infusion and curing.

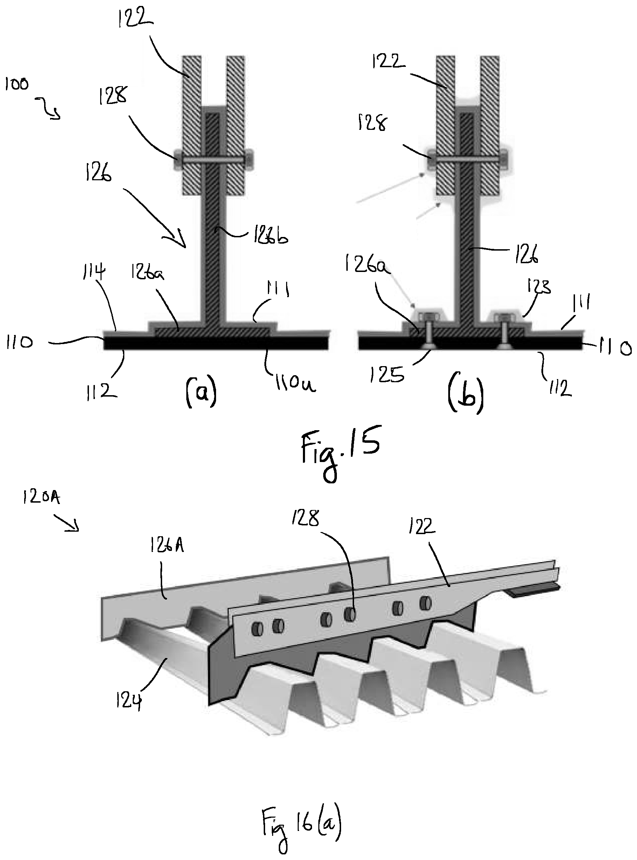

Example embodiments of the stiffened central region 110 and support structure 120 construction of the second mould 100 will now be described with reference to Figs. 15-17.

Fig. 15(a) shows a cross section of the second mould 100 through line x-x of Fig. 8. The upper side 110u (in the orientation shown) of the central portion 110 is bonded to the foot portion 126a of an elongate support element, spar 126 having a T-shaped cross section. A rib portion 126b extends orthogonally from the foot portion 126a, and is coupled by releasable bolts 128 to the primary elements 122. In the embodiment shown, the exposed central portion 110 and surfaces of the spar 126 are covered by the elastomeric bagging material 111 to improve vacuum integrity.

An alternative arrangement is shown in Fig. 15(b), with like features to the example of Fig. 15(a) provided with like reference numerals. Additional threaded fixings 125 secure the foot portion 126a to the central portion 110, and are tapped into the bagging material to be flush with the inner face 112 to minimise surface footprint on the resulting composite parts. Secondary sealing may be provided by sealant or adhesive 123 around the fixings 125, 128.

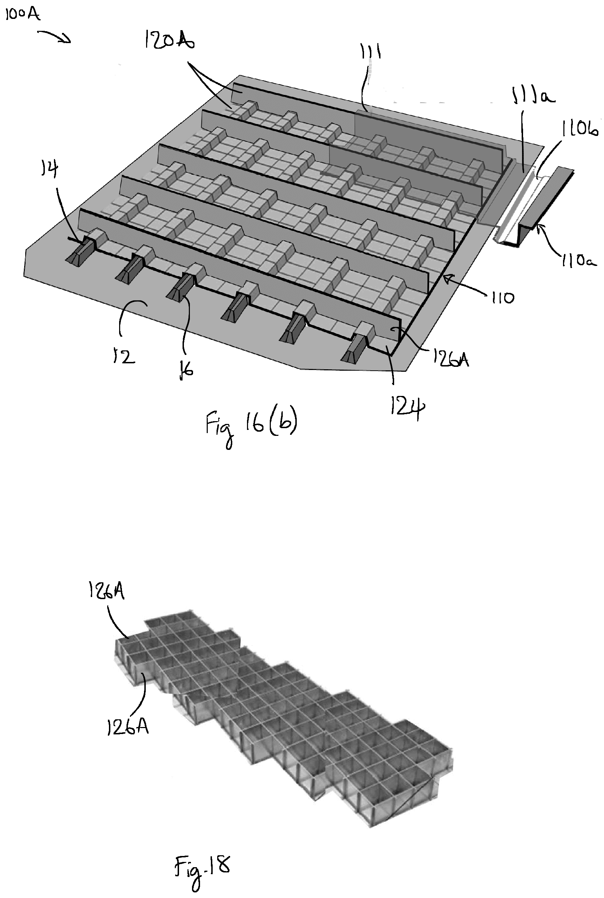

Figs. 16(a) and (b) show perspective cut out views of the support structure 120A of the second tool 100A of Fig. 7, and of the second mould. The primary elements 122 are attached to a series of parallel elongate ribs 126A, which in turn are attached to support panels 124. In the mould 100A, the panels are bonded to the central portion 110. The support panels 124 have a "corrugated" profile to reflect the wing skin application illustrated, and more generally may be provided with a profile to reflect the desired profile of the mould cavity. The panels 124 abut one another so as to continuously support the central region 110. In alternative embodiments there may be gaps between support panels, depending on the degree of mechanical support, ease of opening the mould etc. that is required.

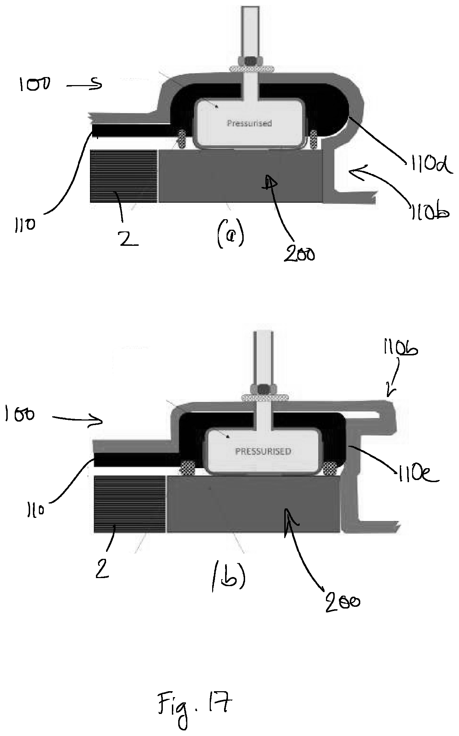

The elastomeric bagging layer 111 encapsulates the panels 124 and ribs 126A and are advantageously co-cured together with the composite of the central portion 110 (Fig. 16(b)) to form what might be termed a "fused structure". The layer 111 may optionally extend beyond the central region 110, the panels 124 and ribs 126A to form a flexible peripheral region 111a, that extends to the periphery 110a. Flexibility of the excess bagging material in the concentrically inner region 110b may thereby be increased in relation to other regions of the mould 110A to facilitate variation of the mould cavity volume, while maintaining a seal, in use. End profiles 110d, 110e of the underlying central region 110 may also be varied to distribute forces transferred to the sealing arrangement and central region when the moulds 2, 100 move in relation to one another in use (see Figs. 17(a) and (b)). Excess material 110b may also be selectively positioned so as to modify how the forces from "dragging" the excess material 100b, when the moulds move in use.

Fig. 18 shows an alternative part of a support structure, with an array of interlocking, orthogonal support elements 126A forming an "egg-box" type structure.

Whilst the invention has been described in connection with the foregoing illustrative embodiments, various modifications, additions and alterations may be made to the invention by one skilled in the art without departing from the scope of the claims.

## Claims

1. A method of composite manufacture, comprising the steps of:
providing a layup of dry reinforcement material on the layup region of a tooling surface of a first mould;
sealing a second mould to the first mould to define a mould cavity around the layup; wherein the seal is gas tight; wherein the second mould has an inner face oriented towards the tooling surface and wherein a region of the tooling surface and the inner face define the mould cavity;
providing a gap within the mould cavity between the layup and a inner face of the second mould, while the first and second mould are sealed;
injecting a flowable matrix material into the gap between the layup and the inner face; and
moving the first and second moulds in relation to one another to reduce the volume of the mould cavity while the first and second moulds are sealed to one another, to thereby infuse the layup with the matrix material;
wherein movement between the first and second moulds in relation to one another to reduce the volume of the mould cavity is effected by a pressure differential between an inside of the mould cavity and an autoclave.

2. The method of claim 1, comprising applying a vacuum to the mould cavity prior to injecting the flowable matrix; and maintaining the gap when the mould cavity is placed under vacuum.

3. The method of any preceding claim, comprising providing the gap by increasing the volume of the mould cavity, wherein the volume of the mould cavity is increased by moving the first and second moulds apart from one another, whilst maintaining the seal.

4. The method of any preceding claim, comprising moving the first and second moulds apart from one another by inflating an inflatable bladder disposed therebetween and/or by moving the first and second moulds apart under the action of an adjustment system.

5. The method of any preceding claim, comprising, after sealing the first mould to the second mould, reducing a volume of the mould cavity to compress or consolidate the dry layup; and optionally wherein the gap is provided by subsequently increasing the volume of the mould cavity.

6. An apparatus for infusing a lay-up of reinforcement material with a matrix material, the apparatus comprising:
a first mould, having a hard tooling surface with a lay-up region;
a second mould having an inner face; wherein the first mould is sealable to the second mould to define a mould cavity that is defined between the lay-up region and the inner face;
a sealing arrangement, for forming a gas-tight seal between the first and second moulds, around a periphery of the lay-up region;
wherein the sealing arrangement is adapted to accommodate variations in the volume of the mould cavity whilst maintaining the seal between the first and second moulds; and
an adjustment system arranged at least partly around the lay-up region adapted to vary the volume of the mould cavity or permit the volume of the mould cavity to vary, under the action of a pressure differential between an inside and an autoclave.

7. The apparatus of claim 6, configured to have an uncompressed configuration, and a compressed configuration, wherein the volume of the mould cavity and a distance between the inner surface and the layup region in the uncompressed configuration is greater than in the compressed configuration:
wherein, the adjustment system has an extended state, in which the apparatus is maintained in the uncompressed configuration, and a collapsed state, in which the apparatus is in the compressed configuration; and
wherein the adjustment system is operable to be moved to the collapsed state under the action of the pressure differential applied between the mould cavity and autoclave.

8. The apparatus of claim 7, wherein the adjustment system is operable to be moved between the collapsed state and the extended state to increase the volume of the mould cavity and place the apparatus in the uncompressed configuration; and/or
wherein the adjustment system is configured to maintain the apparatus in the uncompressed configuration against a pressure differential between the mould cavity and an outside of the mould cavity of at least around 6-8 Bar.

9. The apparatus of any one of claims 6 to 8, wherein second mould includes a support structure coupled to the outer face of the mould, the support structure comprising a plurality of support elements extending across the outer face;
optionally the support structure comprising one or more primary elements, to which the support element or elements are releasably attached by releasable fixings; and
further optionally wherein the one or more primary elements extend laterally beyond the support elements, and are operatively coupled to the actuation system.

10. The apparatus of any one of claims 6 to 9, wherein the second mould comprises a stiffened central region, which is adjacent to the mould cavity in use; and a flexible peripheral region extending beyond the stiffened central region, the flexible peripheral region forming part of the sealing arrangement and configured to seal the second mould to the first mould and accommodate variations in the volume of the mould cavity, in use.

11. The apparatus of claim 10, wherein the second mould comprises a stiff plastics or composite layer laminated to an elastomeric bagging layer across at least the stiffened central region.

12. The apparatus of claim 11, wherein the elastomeric bagging layer comprises the flexible peripheral region; and/or wherein the sealing arrangement comprises an excess of the flexible peripheral region between the primary sealing arrangement and the stiffened central region.

13. The apparatus of any one of claims 6 to 12, wherein the adjustment system comprises one or more inflatable bladders disposed between the first and second moulds around a periphery of the mould cavity; and/or;
wherein the adjustment system comprises a resilient biasing arrangement configured to apply a biasing force to urge the first and second moulds apart from one another, the resilient biasing arrangement comprising one or more resilient biasing members disposed and acting between the tooling surface and the inner face; and/orwherein the adjustment system comprises a lifting mechanism, actuated pneumatically, hydraulically, mechanically or electromechanically or a combination thereof; the lifting mechanism operable to exert a force between the first and second moulds to thereby vary the volume of the mould cavity.

14. A composite manufacturing system comprising the apparatus of any one of claims 6 to 13, and further comprising an autoclave, wherein at least the first and second moulds are positionable in the autoclave, for compressing and/or heating therein of the infused reinforcement layup.
